# FASCICULE DE BREVET EUROPEEN

(11) **EP 0 685 655 B1**
(45) Date de publication et mention de la délivrance du brevet: **04.11.1998**
(21) Numéro de dépôt: 95400977.5
(22) Date de dépôt: 28.04.1995
(51) Int. Cl.: F16B 5/06, B60J 10/02

(54) **Agrafe élastique de fixation**
Elastische Befestigungsklammer
Resilient fastening clip

(30) Priorité: 30.05.1994 FR 9406551
(43) Date de publication de la demande: 06.12.1995
(73) Titulaire: AUTOMOBILES PEUGEOT, 75116 Paris (FR); AUTOMOBILES CITROEN, 92200 Neuilly-sur-Seine (FR)
(72) Inventeur: Vuillemey, Christian, F-70400 Hericourt (FR)
(74) Mandataire: Polus, Camille

(56) Documents cités:
- DE-A- 4 031 743
- US-A- 5 150 940

## Description

La présente invention concerne une agrafe de fixation d'une première pièce sur une seconde pièce ainsi qu'un assemblage obtenu au moyen d'une telle agrafe.

Actuellement, il existe dans l'industrie automobile de nombreuses techniques adaptées pour réaliser l'assemblage de deux pièces entre elles, telles que vissage, collage ou utilisation d'agrafes.

Les techniques de fixation par vissage nécessitent un temps de montage important et nuisent à l'esthétique de l'assemblage, les vis étant apparentes et pouvant subir une attaque corrosive.

Les techniques d'assemblage par collage présentent l'inconvénient de réaliser un assemblage définitif, les deux pièces ne pouvant plus être par la suite dissociées. De plus, des phénomènes de bavure peuvent se produire. Ces techniques d'assemblage par collage nécessitent en outre un temps de séchage non négligeable.

Les techniques d'assemblage de pièces par vissage et par collage sont par ailleurs délicates à mettre en oeuvre pour des fabrications en grande série et sont dès lors mal adaptées à l'industrie automobile.

On a tenté de pallier ces inconvénients en utilisant des agrafes qui peuvent être intégrées à l'une des deux pièces à assembler ou rapportées sur celle-ci avant son montage.

Dans ce dernier cas, la pièce est munie d'une glissière à l'intérieur de laquelle est insérée l'agrafe.

Ces agrafes peuvent comporter une tête et une partie élastiquement déformable reliée à la tête. Selon un mode de réalisation, la partie élastiquement déformable forme une queue constituée de deux bras coudés qui s'étendent à partir de la tête suivant une direction sensiblement perpendiculaire à celle-ci.

L'assemblage de deux pièces au moyen de telles agrafes s'effectue en insérant la partie élastiquement déformable dans un orifice de la seconde pièce, les bras coudés formant une partie élargie coopérant avec la seconde pièce pour réaliser l'assemblage de l'ensemble.

Ces agrafes connues présentent certains inconvénients : elles nécessitent la présence d'orifices dans la seconde pièce, qui ne sont pas toujours aisément réalisables.

De plus, dans le cas où la tête est insérée dans une glissière de la première pièce, l'assemblage est délicat à mettre en oeuvre en grande série.

US-A 5 150 940 décrit un autre type d'agrafe de fixation du type défini dans le préambule de la revendication 1.

L'invention vise à pallier les inconvénients précités en proposant une agrafe de fixation d'une première pièce sur une seconde pièce, qui soit mise en place après positionnement relatif des deux pièces et d'une mise en oeuvre aisée.

Pour ce faire, l'invention a pour objet une agrafe de fixation d'une première pièce sur une seconde pièce comprenant une tête délimitant une face d'appui adaptée pour coopérer avec la première pièce et une partie élastiquement déformable s'étendant à partir de ladite face d'appui et adaptée pour coopérer avec la seconde pièce, la partie élastiquement déformable ayant la forme d'une patte recourbée en forme de "L" dont une première branche s'étend à partir de la face d'appui sensiblement perpendiculairement à celle-ci et dont une seconde branche s'étend sensiblement parallèlement à ladite face d'appui et est adaptée pour coopérer par son extrémité libre avec la seconde pièce, caractérisée en ce que la première branche du "L" est déformable suivant une direction sensiblement parallèle à la face d'appui de la tête et comporte une partie élargie adaptée pour coopérer avec une surface d'appui complémentaire de la première pièce, la partie élargie ayant une forme de losange tronqué à trois sommets, dont la partie tronquée s'étend à partir de la face d'appui, au moins une partie des côtés du losange délimitant des surfaces planes adaptées pour coopérer avec la surface d'appui de la première pièce.

L'invention a également pour objet un assemblage d'une première pièce sur une seconde pièce au moyen d'au moins une agrafe de fixation, ladite agrafe comprenant une tête délimitant une surface d'appui contre la première pièce et une partie élastiquement déformable s'étendant à partir de ladite face d'appui, la première pièce comportant un orifice traversé par la partie élastiquement déformable qui coopère avec la deuxième pièce, caractérisé en ce que la partie élastiquement déformable a la forme d'une patte recourbée dont l'extrémité libre s'étend latéralement par rapport à la tête, la première pièce et l'extrémité libre de la patte recourbée formant une pince venant en prise de part et d'autre de la seconde pièce et en ce que le bord de l'orifice de la première pièce délimite deux rampes opposées adaptées pour coopérer avec des surfaces complémentaires de l'agrafe.

D'autres caractéristiques et avantages ressortiront de la description suivante, donnée à titre d'exemple, en regard des dessins annexés sur lesquels :
- la figure 1 représente une vue en perspective d'une agrafe de fixation selon l'invention ;
- la figure 2 représente une vue en coupe d'un assemblage de deux pièces réalisé au moyen de l'agrafe de fixation représentée sur la figure 1 en position escamotée ;
- la figure 3 représente une vue en coupe d'un assemblage de pièces réalisé au moyen de l'agrafe de fixation représentée sur la figure 1 en position active; et
- la figure 4 représente une vue schématique en perspective d'une partie d'un véhicule automobile dont deux pièces sont assemblées au moyen d'une agrafe de fixation selon l'invention.

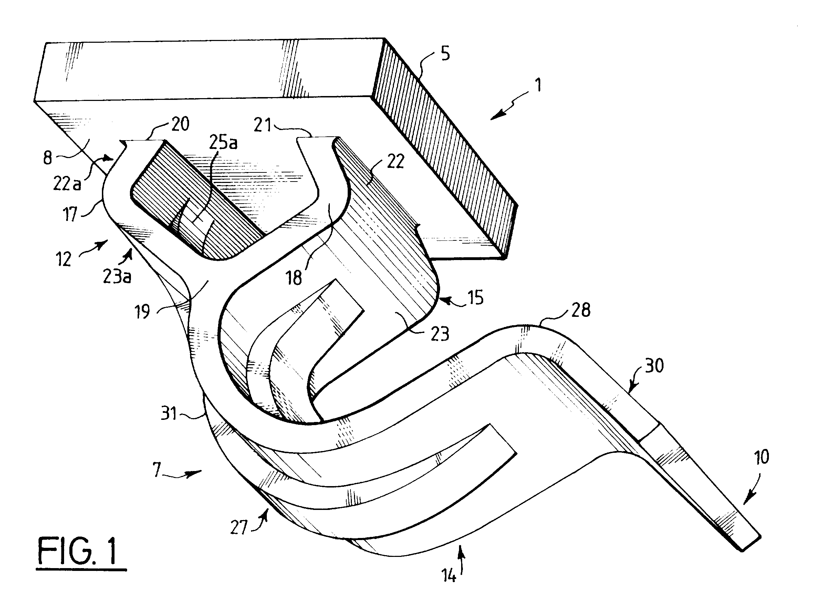

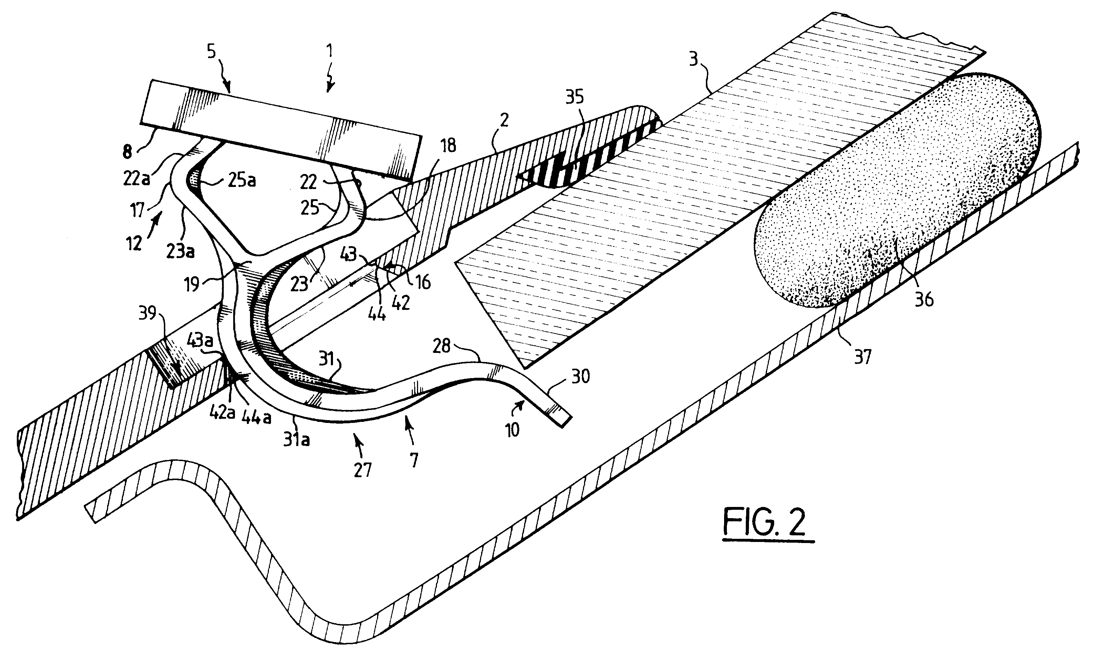

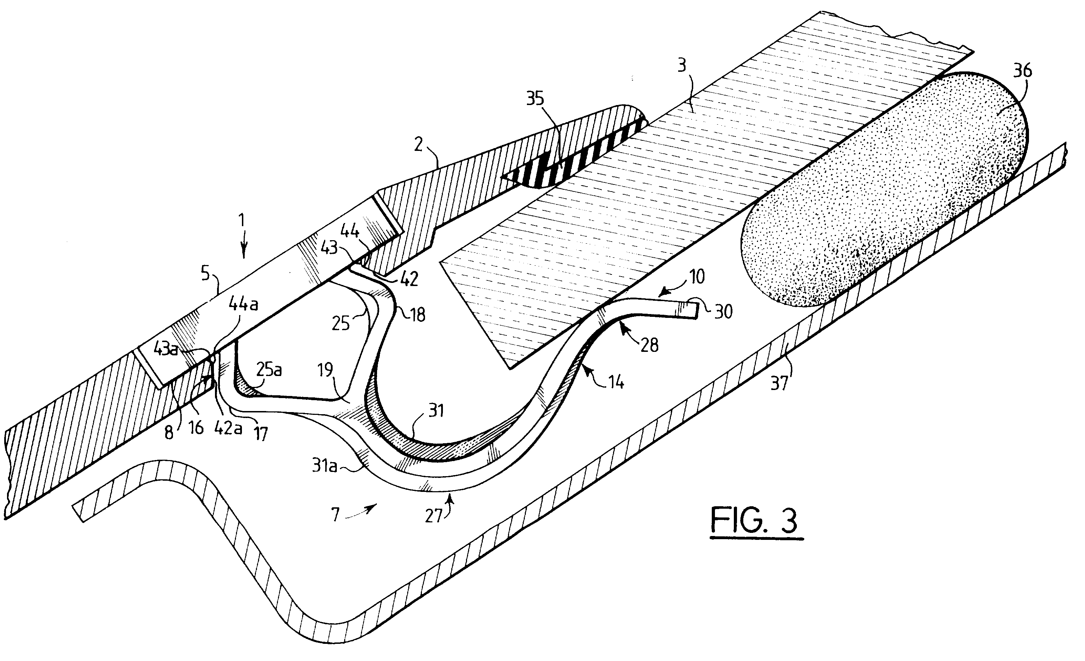

Sur la figure 1 on a représenté une agrafe de fixation 1. Comme cela sera décrit en référence aux figures 2 et 3, l'agrafe 1 est destinée à fixer une première pièce 2 sur une deuxième pièce 3.

L'agrafe de fixation 1 comporte une tête 5 ayant par exemple la forme d'un parallélépipède, dont une face constitue une face d'appui 8 sur la première pièce, et une partie élastiquement déformable 7 s'étendant à partir de la face d'appui 8.

Avantageusement et selon l'invention, la partie élastiquement déformable a la forme d'une patte recourbée dont l'extrémité libre 10 s'étend latéralement par rapport à la tête 5 de la pièce.

La partie élastiquement déformable 7 a une forme de "L" constituée d'une première branche 12 et d'une deuxième branche 14. La première branche 12 s'étend à partir de la tête 5 suivant une direction sensiblement perpendiculaire à la face d'appui 8. La deuxième branche 14 prolonge latéralement la première branche 12 suivant une direction sensiblement parallèle à la face d'appui 8.

La première branche 12 comporte une partie élargie 15 déformable élastiquement et destinée à coopérer avec une surface d'appui 16 complémentaire, de la première pièce 2 (figures 2 et 3). Cette partie élargie 15 a une forme de losange tronqué à trois sommets 17,18 et 19, relié à la face d'appui 8 par l'intermédiaire des deux extrémités 20 et 21 de la partie tronquée.

Les deux sommets opposés 17 et 18 du losange tronqué forment la partie élargie de la première branche 12 du "L" et sont de forme arrondie pour coopérer avec la surface d'appui 16.

Les côtés de ce losange délimitent des surfaces planes 22,23,22a et 23a destinées à coopérer avec la surface d'appui 16 de la première pièce 2.

Chaque bras du losange est muni intérieurement d'au moins une nervure longitudinale 25,25a (figures 2 et 3) destinée à augmenter sa résistance aux déformations élastiques transversales.

La deuxième branche 14 de la patte recourbée s'étend à partir du sommet 19 du losange, opposé à la face d'appui 8.

Cette deuxième branche 14 du "L" comporte une première partie incurvée 27 dont la concavité est tournée vers la tête 5, et une seconde partie incurvée 28 qui prolonge latéralement la première partie incurvée 27, et dont la convexité est tournée vers la tête 5.

Une lèvre rectiligne 30 destinée à faciliter la venue en prise de l'agrafe prolonge latéralement la seconde partie incurvée 28 en s'éloignant de la tête 5.

Les faces interne et externe de la première partie incurvée 27 sont munies de nervures longitudinales 31, 31a de renforcement.

De préférence la patte recourbée a une section tranversale de forme sensiblement rectangulaire, abstraction faite des nervures de renforcement.

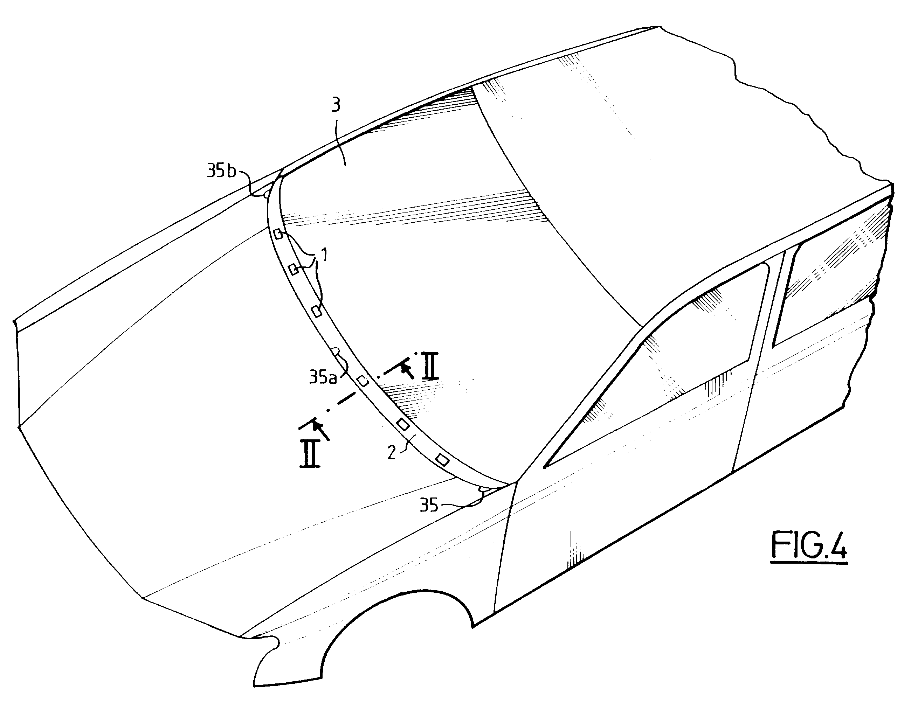

L'assemblage des deux pièces 2 et 3 au moyen de l'agrafe de fixation 1 va maintenant être décrit en référence aux figures 2 et 3 qui sont des vues en coupe selon la ligne II-II sur la figure 4.

Dans l'exemple choisi, la première pièce 2 et la deuxième pièce 3 sont respectivement une grille d'aération et un pare-brise de véhicule automobile... les agrafes 1, étant destinées à fixer la grille d'aération sur la base du pare-brise.

De préférence, la grille est positionnée en regard du pare-brise préalablement à l'assemblage au moyen de l'agrafe 1, par exemple au moyen de vis 35,35a et 35b s'insérant dans la traverse inférieure de baie 37 du véhicule.

La grille d'aération comporte une lèvre d'étanchéité 35 disposée le long de sa zone de contact avec la face avant du pare-brise 3 et des empreintes 39 au fond desquelles sont ménagés des orifices 40. De plus, un bourrelet d'étanchéité 36 est disposé entre le pare-brise 3 et la traverse inférieure de baie 37.

De préférence, les bords de chaque orifice 40 délimitent deux rampes inclinées opposées 42,43,42a et 43a reliées par une arête 44,44a. La distance entre les deux arêtes 44,44a est inférieure à la distance entre les sommets 17 et 18 du losange tronqué.

La mise en place d'une agrafe s'effectue en insérant la patte recourbée dans l'orifice 40 (figure 2), en direction du bord inférieur du pare-brise 3.

On fait passer le sommet 18 au delà de l'arête 44, puis on exerce une pression sur la tête 5, dirigée vers le fond du logement 39, pour enclencher élastiquement le sommet 17 derrière l'arête 44a.

Durant l'insertion de la patte dans l'orifice 40, la zone de contact entre la lèvre 30 et le pare-brise 3 chemine le long de la patte en direction de la deuxième partie incurvée 28, jusqu'à de que la deuxième branche 14 du "L" soit dirigée sensiblement parallèlement au pare-brise 2 (figure 3).

Avantageusement, les rampes 43 et 43a ont une hauteur inférieure à celle des rampes 42 et 42a de façon à faciliter le passage des sommets 17 et 18 au travers de l'orifice 40 en limitant la course de déformation des bras du losange.

Dans la position représentée sur la figure 3, la face d'appui 8 de la tête 5 est en contact avec le fond de l'empreinte 39, et la deuxième partie incurvée 28 de l'agrafe est en contact avec la face arrière du pare-brise 3.

Dès lors, la grille et l'agrafe forment une pince venant en prise de part et d'autre du pare-brise 3.

Ainsi, les deux pièces 2,3 sont maintenues solidement en contact l'une avec l'autre et ce de façon étanche. Bien entendu les dimensions de l'agrafe sont choisies en prenant en compte l'épaisseur de la deuxième pièce.

Le démontage de l'ensemble peut se faire en effectuant une traction sur la pièce 2 de façon à dégager la patte recourbée de la pièce 3 par déformation élastique.

Après le démontage de l'ensemble, l'agrafe 1 reste solidaire de la première pièce 2. En effet, dans cette position, les surfaces 22 et 22a de l'agrafe coopèrent avec les rampes 42 et 42a pour maintenir l'agrafe 1 sur la première pièce 2.

Ainsi, l'agrafe de fixation selon l'invention permet un assemblage simple entre deux pièces, pouvant aisément être mise en oeuvre lors de fabrication en grande série. En outre, cette agrafe ne nécessite pas d'outillage particulier et peut être réutilisée.

## Revendications

1. Agrafe de fixation d'une première pièce (2) sur une seconde pièce (3) comprenant une tête (5) délimitant une face d'appui (8) adaptée pour coopérer avec la première pièce (2) et une partie élastiquement déformable (7) s'étendant à partir de ladite face d'appui (8) et adaptée pour coopérer avec la seconde pièce (3), la partie élastiquement déformable (7) ayant la forme d'une patte recourbée en forme de "L" dont une première branche (12) s'étend à partir de la face d'appui (8) sensiblement perpendiculairement à celle-ci et comporte une partie élargie (15) adaptée pour coopérer avec une surface d'appui (16) complémentaire de la première pièce et dont une seconde branche (14) s'étend sensiblement parallèlement à ladite face d'appui (8) et est adaptée pour coopérer par son extrémité libre avec la seconde pièce (3), caractérisée en ce que la première branche (12) du "L" est déformable suivant une direction sensiblement parallèle à la face d'appui (8) de la tête, la partie élargie ayant une forme de losange tronqué à trois sommets (17, 18, 19), dont la partie tronquée s'étend à partir de la face d'appui (8), au moins une partie des côtés du losange délimitant des surfaces planes (22, 23, 22a, 23a) adaptées pour coopérer avec la surface d'appui (16) de la première pièce.

2. Agrafe de fixation selon la revendication 1, caractérisée en ce que le losange tronqué est muni intérieurement de nervures (25, 25a).

3. Agrafe de fixation selon l'une des revendications 1 et 2, caractérisée en ce que la deuxième branche (14) du "L" comporte une première partie incurvée (27) dont la concavité est tournée vers la tête (5), une deuxième partie incurvée (28) dont la convexité est tournée vers la tête (5) et qui coopère avec la seconde pièce (3) et une lèvre (30) qui prolonge la deuxième partie incurvée (28) en s'écartant de la tête (5).

4. Agrafe de fixation selon la revendication 1, caractérisée en ce que la patte recourbée a une section transversale sensiblement rectangulaire.

5. Agrafe de fixation selon la revendication 3, caractérisée en ce que la première partie incurvée de la deuxième branche du "L" (31, 31a) comporte au moins une nervure de renforcement.

6. Assemblage d'une première pièce (2) sur une seconde pièce (3) au moyen d'au moins une agrafe de fixation (1), ladite agrafe (1) comprenant une tête (5) délimitant une surface (8) d'appui contre la première pièce et une partie (7) élastiquement déformable s'étendant à partir de ladite surface d'appui (8) et ayant la forme d'une patte recourbée dont l'extrémité libre (10) s'étend latéralement par rapport à la tête (5), la première pièce (2) comportant un orifice (40) traversé par la partie élastiquement déformable (7) qui coopère avec la deuxième pièce, la première pièce (2) et l'extrémité libre (10) de la patte recourbée (7) formant une pince venant en prise de part et d'autre de la seconde pièce (3), caractérisé en ce que le bord de l'orifice (40) de la première pièce (2) délimite deux rampes opposées (42, 43, 42a, 43a) adaptées pour coopérer avec des surfaces complémentaires (22, 23, 22a, 23a) de l'agrafe (1), et en ce que lesdites surfaces complémentaires (22, 23, 22a, 23a) sont constituées par au moins une partie des côtés d'un losange d'une première branche (12) de l'agrafe s'étendant sensiblement perpendiculairement à la surface d'appui (8) de celle-ci.

7. Assemblage d'une première pièce sur une deuxième pièce selon la revendication 6, caractérisé en ce qu'une lèvre d'étanchéité (35) est disposée entre la première pièce (2) et la face adjacente de la deuxième pièce (3).

## Patentansprüche

1. Klammer zur Befestigung eines ersten Teils (2) an einem zweiten Teil (3), welche einen Kopf (5), der eine zur Zusammenwirkung mit dem ersten Teil (2) geeignete Anlagefläche (8) begrenzt, und einen sich ab der Anlagefläche (8) erstreckenden und für die Zusammenwirkung mit dem zweiten Teil (3) geeigneten elastisch verformbaren Bereich (7) aufweist, wobei der elastisch verformbare Bereich (7) die Form einer L-förmig gekrümmten Klaue hat, deren erster Arm (12) sich ab der Anlagefläche (8) grob rechtwinklig zu dieser erstreckt und einen verbreiterten und zur Zusammenwirkung mit einer komplementären Anlagefläche (16) des ersten Teils geeigneten Bereich (15) aufweist, und deren zweiter Arm (14) sich grob parallel zu der Anlagefläche (8) erstreckt und geeignet ist, mit seinem freien Ende mit dem zweiten Teil (3) zusammenzuwirken, dadurch gekennzeichnet, daß der erste Arm (12) des L's in einer Richtung verformbar ist, die grob parallel zur Anlagefläche (8) des Kopfes verläuft, wobei der verbreiterte Bereich die Form eines abgestumpften Rhombus mit drei Scheitelpunkten (17, 18, 19) hat, dessen abgestumpfter Bereich sich ab der Anlagefläche (8) erstreckt, und wobei mindestens ein Teil der Rhombusseiten ebene Flächen (22, 23, 22a, 23a) begrenzt, die geeignet sind, mit der Anlagefläche (16) des ersten Teils zusammenzuwirken.

2. Klammer zur Befestigung nach Anspruch 1, dadurch gekennzeichnet, daß der abgestumpfte Rhombus innen mit Rippen (25, 25a) versehen ist.

3. Klammer zur Befestigung nach einem Ansprüche 1 und 2, dadurch gekennzeichnet, daß der zweite Arm (14) des L's einen ersten gekrümmten Bereich (27), dessen Konkavität zum Kopf (5) hin gerichtet ist, einen zweiten gekrümmten Bereich (28), dessen Wölbung zum Kopf (5) hin gerichtet ist und der mit dem zweiten Teil (3) zusammennwirkt, und eine Lippe (30) aufweist, die den zweiten gekrümmten Bereich (28) verlängert, indem sie sich von dem Kopf (5) entfernt.

4. Klammer zur Befestigung nach Anspruch 1, dadurch gekennzeichnet, daß die gekrümmte Klaue einen grob rechtwinkligen Querschnitt hat.

5. Klammer zur Befestigung nach Anspruch 3, dadurch gekennzeichnet, daß der erste gekrümmte Bereich des zweiten Arms des L's (31, 31a) mindestens eine Verstärkungsrippe aufweist.

6. Verbindung eines ersten Teils (2) mit einem zweiten Teil (3) mittels mindestens einer Klammer zur Befestigung (1), wobei die Klammer (1) einen Kopf (5), der eine Fläche (8) zur Anlage an dem ersten Teil begrenzt, und einen elastisch verformbaren Bereich (7) aufweist, welcher sich ab der Anlagefläche (8) erstreckt und die Form einer gekrümmten Klaue hat, deren freies Ende (10) sich seitlich des Kopfes (5) erstreckt, wobei das erste Teil (2) eine Öffnung (40) aufweist, die von dem elastisch verformbaren und mit dem zweiten Teil zusammenwirkenden Bereich (7) durchdrungen wird, und wobei das erste Teil (2) und das freie Ende (10) der gekrümmten Klaue (7) eine Zange bilden, die beiderseits des zweiten Teils (3) zum Eingriff kommt, dadurch gekennzeichnet, daß der Rand (40) des ersten Teils (2) zwei gegenüberliegende Rampen (42, 43, 42a, 43a) begrenzt, die geeignet sind, mit komplementären Flächen (22, 23, 22a, 23a) der Klammer (1) zusammenzuwirken, und daß diese Komplementärflächen (22, 23, 22a, 23a) aus mindestens einem Teil der Seiten eines Rhombus eines ersten Arms (12) der Klammer gebildet werden, der sich grob rechtwinklig zu deren Anlagefläche (8) erstreckt.

7. Verbindung eines ersten Teils mit einem zweiten Teil gemäß Anspruch 6, dadurch gekennzeichnet, daß eine Dichtlippe (35) zwischen dem ersten Teil (2) und der angrenzenden Seite des zweiten Teils (3) angeordnet ist.

## Claims

1. Clip for fastening a first part (2) to a second part (3) comprising a head (5) defining a support face (8) adapted to co-operate with the first part (2), and an elastically deformable portion (7) extending from the said support face (8) and adapted to co-operate with the second part (3), the elastically deformable portion (7) having the form of a curved-back tab in an "L" shape, one first branch (12) of which extends from the support face (8) substantially perpendicular to the latter, and comprises a widened portion (15) adapted to co-operate with a complementary support face (16) of the first part, and a second branch (14) of which extends substantially parallel to the said support face (8), and is adapted to co-operate by its free end with the second part (3), characterised in that the first branch (12) of the "L" is deformable in a direction substantially parallel to the support face (8) of the head, the widened portion having the shape of a truncated rhombus with three apices (17,18,19), the truncated portion extending from the support face (8), at least one portion of the sides of the rhombus defining plane surfaces (22,23,22a,23a) adapted to co-operate with the support surface (16) of the first part.

2. Fastening clip according to claim 1, characterised in that the truncated rhombus is internally equipped with ribs (25,25a).

3. Fastening clip according to one of claims 1 and 2, characterised in that the second branch (14) of the "L" comprises a first inwardly-curved portion (27) the concavity of which is turned towards the head (5), a second inwardly-curved portion (28), whose concavity is turned towards the head (5) and which co-operates with the second part (3), and a lip (30) which extends the second inwardly-curved portion (28) diverging from the head (5).

4. Fastening clip according to claim 1, characterised in that the curved-back tab has a transverse section which is substantially rectangular.

5. Fastening clip according to claim 3, characterised in that the first inwardly curved portion of the second branch of the "L" (31,31a) comprises at least one reinforcing rib.

6. Assembly of a first part (2) on a second part (3) by means of at least one fastening clip (1), said clip (1) comprising a head (5) defining a support surface (8) against the first part and an elastically deformable portion (7) extending from the said support surface (8) and having the shape of a curved-back tab the free end (10) of which extends laterally relative to the head (5), the first part (2) comprising an aperture (40) through which the elastically deformable portion (7) passes, which co-operates with the second part, the first part (2) and the free end (10) of the curved-back tab (7) forming a pincer engaging on either side of the second part (3), characterised in that the edge of the aperture (40) of the first part (2) defines two opposed ramps (42,43,42a,43a) adapted to co-operate with complementary surfaces (22,23,22a,23a) of the clip (1), and in that the said complementary surfaces (22,23,22a,23a) are constituted by at least one portion of the sides of a rhombus of a first branch (12) of the clip extending substantially perpendicularly to the support surface (8) of the latter.

7. Assembly of a first part on a second part according to claim 6, characterised in that a sealing lip (35) is disposed between the first part (2) and the adjacent face of the second part (3).
